# EUROPÄISCHE PATENTSCHRIFT

(11) **EP 3 853 990 B1**
(45) Veröffentlichungstag und Bekanntmachung des Hinweises auf die Patenterteilung: **27.11.2024**
(21) Anmeldenummer: 19817156.3
(22) Anmeldetag: 31.10.2019
(51) Int. Cl.: H02M 7/487, H02M 7/5388

(54) **3-STUFIGER AKTIV NEUTRALPUNKTGEKLEMMTER (ANPC) HYBRID-WECHSELRICHTER**
3-LEVEL ACTIV NEUTRAL POINT CLAMPED (ANPC) HYBRID INVERTER
ONDULEUR HYBRIDE À 3 NIVEAUX (ANPC)

(30) Priorität: 12.11.2018 DE 102018219270
(43) Veröffentlichungstag der Anmeldung: 28.07.2021
(73) Patentinhaber: KACO new energy GmbH, 74172 Neckarsulm (DE)
(72) Erfinder: DRANGMEISTER, Harald, 74074 Heilbronn (DE); HESS, Sebastian, 71634 Ludwigsburg (DE); MEISSINGER, Sven, 74889 Sinsheim (DE); STAROBINSKI, Gennadi, 34134 Kassel (DE)
(74) Vertreter: Siemens Patent Attorneys
(86) Internationale Anmeldenummer: PCT/EP2019/079921
(87) Internationale Veröffentlichungsnummer: WO 2020/099145

(56) Entgegenhaltungen:
- EP-A1- 2 372 893
- EP-A1- 3 188 355
- EP-A1- 3 291 435
- EP-A1- 3 301 804
- EP-B1- 2 372 893
- WO-A1-02/23703
- DE-A1- 10 140 747
- US-A1- 2003 048 650
- US-A1- 2019 013 743
- GUAN QING-XIN ET AL: "An Extremely High Efficient Three-Level Active Neutral-Point-Clamped Converter Comprising SiC and Si Hybrid Power Stages", IEEE TRANSACTIONS ON POWER ELECTRONICS, INSTITUTE OF ELECTRICAL AND ELECTRONICS ENGINEERS, USA, vol. 33, no. 10, 1 October 2018 (2018-10-01), pages 8341 - 8352, XP011687290, ISSN: 0885-8993, [retrieved on 20180717], DOI: 10.1109/TPEL.2017.2784821

## Beschreibung

Die Erfindung betrifft einen Wechselrichter.

Die Veröffentlichung Qing-Xin Guan et al. "An Extremely High Efficient Three-Level Active Neutral-Point-Clamped Converter Comprising SiC and Si Hybrid Power Stages" in IEEE TRANSACTIONS ON POWER ELECTRONICS, VOL. 33, NO. 10, OCTOBER 2018, Seiten 8341-8352 beschreibt einen Wechselrichter in Form eines Mehrstufenumrichters. Die Patentdokumente EP 3 188 355 A1, DE 101 40 747 A1, EP 2 372 893 A1, EP 3 301 804 A1 und US 2003/048650 A1 behandeln ebenfalls derartige Wechselrichter und Verfahren zu deren Betrieb.

Der Erfindung liegt die Aufgabe zugrunde, einen Wechselrichter zur Verfügung zu stellen, der den in der Veröffentlichung von Qing-Xin Guan et al. beschriebenen Mehrstufenumrichter in vorteilhafter Weise weiterbildet.

Die Erfindung löst diese Aufgabe durch einen Wechselrichter nach Anspruch 1.

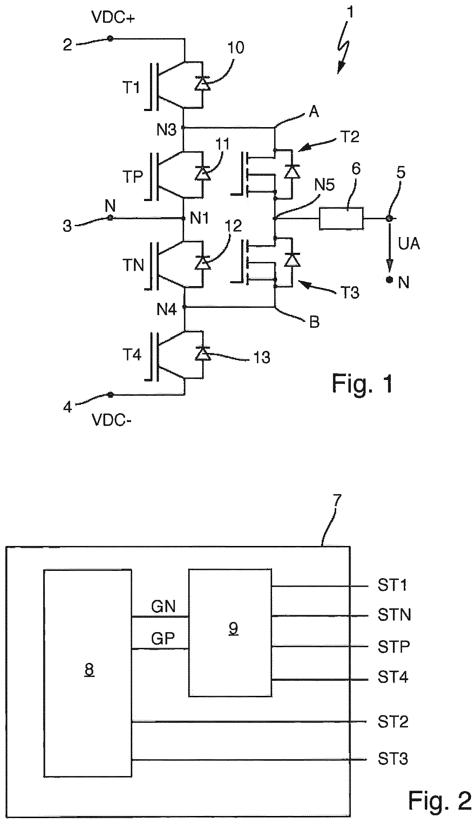

Der Wechselrichter bzw. Mehrstufenumrichter ist insbesondere als PV-Wechselrichter ausgebildet und weist auf: einen ersten Eingangsanschlusspol, an den bestimmungsgemäß ein positives Zwischenkreispotential anzulegen ist, einen zweiten Eingangsanschlusspol, an den bestimmungsgemäß ein Mittenpotential anzulegen ist, einen dritten Eingangsanschlusspol, an den bestimmungsgemäße ein negatives Zwischenkreispotential anzulegen ist, einen Ausgangsanschlusspol, an dem im Betrieb des Wechselrichters ein Ausgangspotential ansteht, eine Drossel, ein erstes Schaltmittel, ein zweites Schaltmittel, ein drittes Schaltmittel und ein viertes Schaltmittel, wobei das erste Schaltmittel, das zweite Schaltmittel, das dritte Schaltmittel und das vierte Schaltmittel in Reihe zwischen den ersten Eingangsanschlusspol und den dritten Eingangsanschlusspol eingeschleift sind, und wobei ein Verbindungsknoten des zweiten Schaltmittels und des dritten Schaltmittels mit dem zweiten Eingangsanschlusspol elektrisch verbunden ist, ein fünftes Schaltmittel und ein sechstes Schaltmittel, wobei das fünfte Schaltmittel und das sechste Schaltmittel in Reihe zwischen einen Verbindungsknoten des ersten Schaltmittels und des zweiten Schaltmittels und einen Verbindungsknoten des dritten Schaltmittels und des vierten Schaltmittels eingeschleift sind, wobei die Drossel zwischen einen Verbindungsknoten des fünften Schaltmittels und des sechsten Schaltmittels und den Ausgangsanschlusspol eingeschleift ist, und eine Steuereinheit, die dazu ausgebildet ist die Schaltmittel anzusteuern. Insoweit entspricht der erfindungsgemäße Wechselrichter topologisch dem in Fig. 2a der Veröffentlichung von Qing-Xin Guan et al. gezeigten Wechselrichter bzw. Mehrstufenumrichter.

Ferner ist die Steuereinheit dazu ausgebildet, vor einem Einschalten des vierten Schaltmittels die Schaltmittel derart anzusteuern, dass das fünfte Schaltmittel im ausgeschalteten Zustand mit einer Spannung beaufschlagt ist, deren Betrag die Hälfte der Potentialdifferenz zwischen dem positiven Zwischenkreispotential und dem negativen Zwischenkreispotential nicht überschreitet, und/oder die Steuereinheit ist dazu ausgebildet, vor einem Einschalten des ersten Schaltmittels die Schaltmittel derart anzusteuern, dass das sechste Schaltmittel im ausgeschalteten Zustand mit einer Spannung beaufschlagt ist, deren Betrag die Hälfte der Potentialdifferenz zwischen dem positiven Zwischenkreispotential und dem negativen Zwischenkreispotential nicht überschreitet.

Gemäß einer Ausführungsform ist die Steuereinheit dazu ausgebildet, vor einem Einschalten des vierten Schaltmittels die Schaltmittel derart anzusteuern, dass während eines vorgegebenen ersten Zeitintervalls ein Potential am Verbindungsknoten des dritten Schaltmittels und des vierten Schaltmittels dem Mittenpotential entspricht. Entsprechend ist die Steuereinheit dazu ausgebildet, vor einem Einschalten des ersten Schaltmittels die Schaltmittel derart anzusteuern, dass während eines vorgegebenen zweiten Zeitintervalls ein Potential am Verbindungsknoten des zweiten Schaltmittels und des ersten Schaltmittels dem Mittenpotential entspricht. Dies bewirkt, dass das fünfte bzw. sechste Schaltmittel nicht mit der vollständigen Zwischenkreisspannung beaufschlagt sind, sondern lediglich maximal mit der Hälfte der Zwischenkreisspannung.

Erfindungsgemäß ist die Steuereinheit dazu ausgebildet, ein Ansteuersignal für das erste Schaltmittel, ein Ansteuersignal für das zweite Schaltmittel, ein Ansteuersignal für das dritte Schaltmittel, ein Ansteuersignal für das vierte Schaltmittel, ein Ansteuersignal für das fünfte Schaltmittel und ein Ansteuersignal für das sechste Schaltmittel zu erzeugen. Die Steuereinheit weist für diesen Fall einen Signalprozessor und eine Logikeinheit auf, wobei der Signalprozessor dazu ausgebildet ist, das Ansteuersignal für das fünfte Schaltmittel und das Ansteuersignal für das sechste Schaltmittel selbst unmittelbar zu erzeugen, und selbst und unmittelbar ein erstes Grundansteuersignal und ein zweites Grundansteuersignal zu erzeugen. Die Logikeinheit ist dazu ausgebildet, aus dem ersten Grundansteuersignal das Ansteuersignal für das erste Schaltmittel und das Ansteuersignal für das dritte Schaltmittel zu erzeugen und aus dem zweiten Grundansteuersignal das Ansteuersignal für das zweite Schaltmittel und das Ansteuersignal für das vierte Schaltmittel zu erzeugen.

Gemäß einer Ausführungsform ist die Logikeinheit dazu ausgebildet, bei einer fallenden Flanke des ersten Grundansteuersignals zeitgleich eine fallende Flanke des Ansteuersignals für das erste Schaltmittel zu erzeugen und zeitverzögert eine fallende Flanke des Ansteuersignals für das dritte Schaltmittel zu erzeugen, bei einer steigenden Flanke des ersten Grundansteuersignals zeitverzögert eine steigende Flanke des Ansteuersignals für das erste Schaltmittel zu erzeugen und zeitgleich eine steigende Flanke des Ansteuersignals für das dritte Schaltmittel zu erzeugen, bei einer fallenden Flanke des zweiten Grundansteuersignals zeitgleich eine fallende Flanke des Ansteuersignals für das vierte Schaltmittel zu erzeugen und zeitverzögert eine fallende Flanke des Ansteuersignals für das zweite Schaltmittel zu erzeugen, und bei einer steigenden Flanke des zweiten Grundansteuersignals zeitverzögert eine steigende Flanke des Ansteuersignals für das vierte Schaltmittel zu erzeugen und zeitgleich eine steigende Flanke des Ansteuersignals für das zweite Schaltmittel zu erzeugen.

Die erfindungsgemäße Ansteuerung der Schaltmittel erfordert sechs 6 PWM Ansteuersignale pro Phase. Bei 3-phasigen interleaved arbeitenden Wechselrichtern, d.h. zwei Wechselrichter arbeiten auf dieselbe Phase zueinander phasenverschoben bzw. interleaved, benötigt man also 36 PWM Ausgänge eines Signalprozessors (DSP). Bei herkömmlichen DSPs stehen jedoch nur maximal 24 PWM Ausgänge zu Verfügung. Um insoweit eine Lösung zu bieten, d.h. um weiterhin Standard DSPs verwenden zu können, erzeugt die Logikeinheit die erforderlichen weiteren Ansteuersignale.

Gemäß einer Ausführungsform sind den Schaltmitteln jeweilige Freilaufdioden parallel geschaltet.

Gemäß einer Ausführungsform sind das erste Schaltmittel, das zweite Schaltmittel, das dritte Schaltmittel und das vierte Schaltmittel jeweils IGBTs, und das fünfte Schaltmittel und das sechste Schaltmittel sind jeweils SiC-Schaltmittel.

Die Erfindung wird nachfolgend unter Bezugnahme auf die Zeichnungen detailliert beschrieben. Hierbei zeigt:
- Fig. 1: ein Schaltbild eines Teils eines erfindungsgemäßen PV-Wechselrichters,
- Fig. 2: ein Blockschaltbild einer Steuereinheit des in Fig. 1 gezeigten Wechselrichters und
- Fig. 3: einen zeitlichen Verlauf von Ansteuersignalen, die mittels der in Fig. 3 gezeigten Steuereinheit erzeugt werden.

Fig. 1 zeigt ein Schaltbild eines Teils eines erfindungsgemäßen Photovoltaik(PV)-Wechselrichters 1. Der PV-Wechselrichter weist auf: einen ersten Eingangsanschlusspol 2, an den im Betrieb des Wechselrichters 1 ein positives Zwischenkreispotential VDC+ angelegt ist, einen zweiten Eingangsanschlusspol 3, an den im Betrieb des Wechselrichters 1 ein Mittenpotential N angelegt ist, einen dritten Eingangsanschlusspol 4, an den im Betrieb des Wechselrichters 1 ein negatives Zwischenkreispotential VDC- angelegt ist, einen Ausgangsanschlusspol 5, an dem im Betrieb des Wechselrichters 1 ein Ausgangspotential UA ausgegeben wird, eine Drossel 6, ein erstes Halbleiter-Schaltmittel T1, ein zweites Halbleiter-Schaltmittel TP, ein drittes Halbleiter-Schaltmittel TN und ein viertes Halbleiter-Schaltmittel T4, wobei das erste Schaltmittel T1, das zweite Schaltmittel TP, das dritte Schaltmittel TN und das vierte Schaltmittel T4 in Reihe zwischen den ersten Eingangsanschlusspol 2 und den dritten Eingangsanschlusspol 4 eingeschleift sind, und wobei ein Verbindungsknoten N1 des zweiten Schaltmittels TP und des dritten Schaltmittels TN mit dem zweiten Eingangsanschlusspol 3 elektrisch verbunden ist, ein fünftes Halbleiter-Schaltmittel T2 und ein sechstes Halbleiter-Schaltmittel T3, wobei das fünfte Schaltmittel T2 und das sechste Schaltmittel T3 in Reihe zwischen einen Verbindungsknoten N3 des ersten Schaltmittels T1 und des zweiten Schaltmittels TP und einen Verbindungsknoten N4 des dritten Schaltmittels TN und des vierten Schaltmittels T4 eingeschleift sind, wobei die Drossel 5 zwischen einen Verbindungsknoten N5 des fünften Schaltmittels T2 und des sechsten Schaltmittels T3 und den Ausgangsanschlusspol 5 eingeschleift ist, und eine Steuereinheit 7, siehe Fig. 2, die dazu ausgebildet ist, die Schaltmittel T1, T2, T3, T4, TP, TN anzusteuern.

Den Schaltmitteln T1, T2, T3, T4, TP, TN sind jeweilige Freilaufdioden 10, 11, 12, 13 in der gezeigten Schaltrichtung parallel geschaltet.

Das erste Schaltmittel T1, das zweite Schaltmittel TP, das dritte Schaltmittel TN und das vierte Schaltmittel T4 sind jeweils IGBTs. Das fünfte Schaltmittel T2 und das sechste Schaltmittel T3 sind jeweils SiC-Schaltmittel.

Die in Fig. 1 gezeigte Topologie entspricht der in Fig. 2a der Veröffentlichung von Qing-Xin Guan et al. gezeigten Topologie. Die Schaltmittel T1, T2, T3, T4, TP, TN werden jedoch anders als in der dortigen Fig. 2b angesteuert, wie im Folgenden detailliert beschrieben wird.

Fig. 2 zeigt die Steuereinheit 7, dazu ausgebildet ist, ein Ansteuersignal ST1 für das erste Schaltmittel T1, ein Ansteuersignal STP für das zweite Schaltmittel TP, ein Ansteuersignal STN für das dritte Schaltmittel TN, ein Ansteuersignal ST4 für das vierte Schaltmittel T4, ein Ansteuersignal ST2 für das fünfte Schaltmittel T2 und ein Ansteuersignal ST3 für das sechste Schaltmittel T3 zu erzeugen.

Die Steuereinheit 7 weist einen herkömmlichen Signalprozessor 8 und eine Logikeinheit 9 auf, wobei der Signalprozessor 8 dazu ausgebildet ist, das Ansteuersignal ST2 für das fünfte Schaltmittel T2 und das Ansteuersignal ST3 für das sechste Schaltmittel T3 zu erzeugen, und ein erstes Grundansteuersignal GN und ein zweites Grundansteuersignal GP zu erzeugen.

Die Logikeinheit 9 ist dazu ausgebildet, aus dem ersten Grundansteuersignal GN das Ansteuersignal ST1 für das erste Schaltmittel T1 und das Ansteuersignal STN für das dritte Schaltmittel TN zu erzeugen und aus dem zweiten Grundansteuersignal GP das Ansteuersignal STP für das zweite Schaltmittel TP und das Ansteuersignal ST4 für das vierte Schaltmittel T4 zu erzeugen.

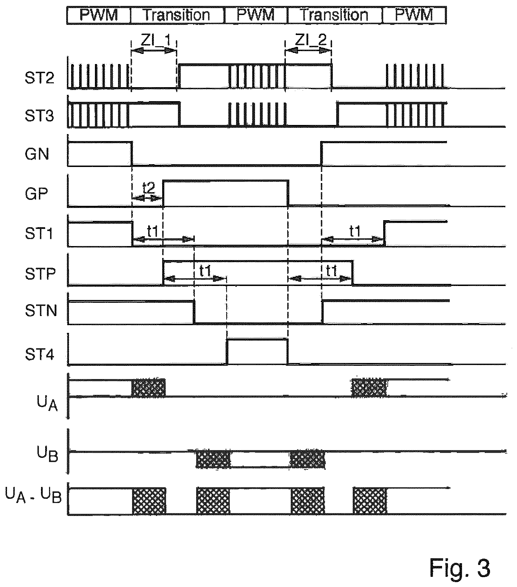

Fig. 3 zeigt nun einen zeitlichen Verlauf der oben genannten Ansteuersignale.

In den mit PWM bezeichneten Zeitintervallen werden die Schaltmittel T2 und T3 gemäß einem PWM-Schema angesteuert, wie es beispielsweise in der Veröffentlichung von Qing-Xin Guan et al. beschrieben ist.

In den mit Transition bezeichneten Zeitintervallen werden sämtliche Schaltmittel T1, T2, T3, T4, TP, TN derart angesteuert, dass das fünfte Schaltmittel T2 im ausgeschalteten Zustand mit einer Spannung beaufschlagt ist, deren Betrag die Hälfte der Potentialdifferenz zwischen dem positiven Zwischenkreispotential VDC+ und dem negativen Zwischenkreispotential VDC- nicht überschreitet, und dass das sechste Schaltmittel T3 im ausgeschalteten Zustand mit einer Spannung beaufschlagt ist, deren Betrag die Hälfte der Potentialdifferenz zwischen dem positiven Zwischenkreispotential VDC+ und dem negativen Zwischenkreispotential VDC- nicht überschreitet.

Die Ansteuersignale werden derart erzeugt, dass vor einem Einschalten des vierten Schaltmittels T4 die Schaltmittel T1, T2, T3, T4, TP, TN einen Schaltzustand derart aufweisen, dass während eines ersten vorgegebenen Zeitintervalls ZI_1 ein Potential am Verbindungsknoten N4 des dritten Schaltmittels TN und des vierten Schaltmittels T4 dem Mittenpotential N entspricht. Entsprechend werden vor einem Einschalten des ersten Schaltmittels T1 die Ansteuersignale derart erzeugt, dass die Schaltmittel T1, T2, T3, T4, TP, TN einen Schaltzustand derart aufweisen, dass während eines vorgegebenen zweiten Zeitintervalls ZI_2 ein Potential am Verbindungsknoten N3 des zweiten Schaltmittels TP und des ersten Schaltmittels T1 dem Mittenpotential N entspricht.

Die Logikeinheit 9 ist dazu ausgebildet, bei einer fallenden Flanke des ersten Grundansteuersignals GN zeitgleich eine fallende Flanke des Ansteuersignals ST1 für das erste Schaltmittel T1 zu erzeugen und zeitverzögert um eine Zeitverzögerung t1 eine fallende Flanke des Ansteuersignals STN für das dritte Schaltmittel TN zu erzeugen, und bei einer steigenden Flanke des ersten Grundansteuersignals GN zeitverzögert um die Zeitverzögerung t1 eine steigende Flanke des Ansteuersignals ST1 für das erste Schaltmittel T1 zu erzeugen und zeitgleich eine steigende Flanke des Ansteuersignals STN für das dritte Schaltmittel TN zu erzeugen.

Die Logikeinheit 9 ist weiter dazu ausgebildet, bei einer fallenden Flanke des zweiten Grundansteuersignals GP zeitgleich eine fallende Flanke des Ansteuersignals ST4 für das vierte Schaltmittel T4 zu erzeugen und zeitverzögert um die Zeitverzögerung t1 eine fallende Flanke des Ansteuersignals STP für das zweite Schaltmittel TP zu erzeugen, und bei einer steigenden Flanke des zweiten Grundansteuersignals GP zeitverzögert um die Zeitverzögerung t1 eine steigende Flanke des Ansteuersignals ST4 für das vierte Schaltmittel T4 zu erzeugen und zeitgleich eine steigende Flanke des Ansteuersignals STP für das zweite Schaltmittel TP zu erzeugen.

Die Ansteuersignale ST1 und STN für die Schaltmittel T1 bzw. TN basieren auf dem ersten Grundansteuersignal GN und die die Ansteuersignale ST4 und STP für die Schaltmittel T4 bzw. TP basieren auf dem zweiten Grundansteuersignal GP. Das Ansteuersignal ST1 für das Schaltmittel T1 wird aber verzögert eingeschaltet und ohne Verzögerung ausgeschaltet. Das Ansteuersignal STN für das Schaltmittel TN wird ohne Verzögerung eingeschaltet und mit Verzögerung ausgeschaltet. Die Verzögerung muss min. einer doppelten Totzeit t2 entsprechen. Hierdurch ist sichergestellt, dass bei dem Umschaltprozess die Schaltmittel TP und TN für mindestens eine einzelne Totzeit t2 gemeinsam angeschaltet sind.

Gemäß der Veröffentlichung von Qing-Xin Guan et al. sind die Schaltmittel T1 und Tn mit demselben Steuersignal beaufschlagt und die Schaltmittel T4 und Tp sind mit demselben Steuersignal beaufschlagt, siehe dort "Table 1". Dies führt jedoch zwangsläufig dazu, dass die Schaltmittel T2 und T3 bei gewissen Schaltzustandsabfolgen mit der gesamten Zwischenkreisspannung beaufschlagt werden. Dies erfordert es, die Sperrspannung der Schaltmittel so weit zu erhöhen, dass diese die vollständige Zwischenkreisspannung sperren können. Dies wiederum erfordert Halbleiter mit entsprechend höherer Sperrspannung. Diese weisen jedoch bei gleichen Durchlassverlusten eine größere Fläche auf. Eine größere Fläche bedeutet wiederum höhere Kosten. Weiter haben derartige Halbleiter schlechtere dynamische Eigenschaften, was zu höheren Schaltverlusten führt.

Erfindungsgemäß wird im Zuge der Umschaltung von positiver Ausgangsspannung zu negativer Ausgangsspannung der Knoten TN/T3 zu T4 zeitweilig auf Zwischenkreismitte N gehalten bzw. geklemmt. Entsprechend wird bei der Umschaltung von negativer Ausgangsspannung zu positiver Ausgangsspannung der Knoten TP/T2 zu T1 zeitweilig auf Zwischenkreismitte N gehalten bzw. geklemmt. Dies bewirkt, dass die Schaltmittel T2 und T3 nicht mit der vollständigen Zwischenkreisspannung beaufschlagt sind, sondern lediglich maximal mit der Hälfte der Zwischenkreisspannung. Daher können als Schaltmittel Halbeiter mit entsprechend kleinerer Sperrspannung verwendet werden.

Es können mehrere, insbesondere zwei, der in Fig. 1 gezeigten Wechselrichter 1 parallel geschaltet sein, die dann interleaved bzw. mit Phasenversatz betrieben werden.

Die Zwischenkreisspannung kann herkömmlich von einer geeigneten DC-Quelle, beispielsweise von einem oder mehreren Solarmodulen, erzeugt werden. Das Ausgangspotential bzw. die Ausgangsspannung UA kann zur herkömmlich zur Netzeinspeisung dienen.

## Patentansprüche

1. Wechselrichter (1), aufweisend:
- einen ersten Eingangsanschlusspol (2), an den im Betrieb des Wechselrichters (1) ein positives Zwischenkreispotential (VDC+) angelegt ist,
- einen zweiten Eingangsanschlusspol (3), an den im Betrieb des Wechselrichters (1) ein Mittenpotential (N) angelegt ist,
- einen dritten Eingangsanschlusspol (4), an den im Betrieb des Wechselrichters (1) ein negatives Zwischenkreispotential (VDC-) angelegt ist,
- einen Ausgangsanschlusspol (5), an dem im Betrieb des Wechselrichters (1) ein Ausgangspotential (UA) ausgegeben wird,
- eine Drossel (6),
- ein erstes Schaltmittel (T1), ein zweites Schaltmittel (TP), ein drittes Schaltmittel (TN) und ein viertes Schaltmittel (T4), wobei das erste Schaltmittel (T1), das zweite Schaltmittel (TP), das dritte Schaltmittel (TN) und das vierte Schaltmittel (T4) in Reihe zwischen den ersten Eingangsanschlusspol (2) und den dritten Eingangsanschlusspol (4) eingeschleift sind, und wobei ein Verbindungsknoten (N1) des zweiten Schaltmittels (TP) und des dritten Schaltmittels (TN) mit dem zweiten Eingangsanschlusspol (3) elektrisch verbunden ist,
- ein fünftes Schaltmittel (T2) und ein sechstes Schaltmittel (T3), wobei das fünfte Schaltmittel (T2) und das sechste Schaltmittel (T3) in Reihe zwischen einen Verbindungsknoten (N3) des ersten Schaltmittels (T1) und des zweiten Schaltmittels (TP) und einen Verbindungsknoten (N4) des dritten Schaltmittels (TN) und des vierten Schaltmittels (T4) eingeschleift sind, wobei die Drossel (5) zwischen einen Verbindungsknoten (N5) des fünften Schaltmittels (T2) und des sechsten Schaltmittels (T3) und den Ausgangsanschlusspol (5) eingeschleift ist, und
- eine Steuereinheit (7), die dazu ausgebildet ist die Schaltmittel (T1, T2, T3, T4, TP, TN) anzusteuern,
- wobei die Steuereinheit (7) dazu ausgebildet ist, vor einem Einschalten des vierten Schaltmittels (T4) die Schaltmittel (T1, T2, T3, T4, TP, TN) derart anzusteuern, dass das fünfte Schaltmittel (T2) im ausgeschalteten Zustand mit einer Spannung beaufschlagt ist, deren Betrag die Hälfte der Potentialdifferenz zwischen dem positiven Zwischenkreispotential (VDC+) und dem negativen Zwischenkreispotential (VDC-) nicht überschreitet, und/oder
- wobei die Steuereinheit (7) dazu ausgebildet ist, vor einem Einschalten des ersten Schaltmittels (T1) die Schaltmittel (T1, T2, T3, T4, TP, TN) derart anzusteuern, dass das sechste Schaltmittel (T3) im ausgeschalteten Zustand mit einer Spannung beaufschlagt ist, deren Betrag die Hälfte der Potentialdifferenz zwischen dem positiven Zwischenkreispotential (VDC+) und dem negativen Zwischenkreispotential (VDC-) nicht überschreitet,
**dadurch gekennzeichnet, dass**
- die Steuereinheit (7) dazu ausgebildet ist, ein Ansteuersignal (ST1) für das erste Schaltmittel (T1), ein Ansteuersignal (STP) für das zweite Schaltmittel (TP), ein Ansteuersignal (STN) für das dritte Schaltmittel (TN), ein Ansteuersignal (ST4) für das vierte Schaltmittel (T4), ein Ansteuersignal (ST2) für das fünfte Schaltmittel (T2) und ein Ansteuersignal (ST3) für das sechste Schaltmittel (T3) zu erzeugen,
- wobei die Steuereinheit (7) einen Signalprozessor (8) und eine Logikeinheit (9) aufweist,
- wobei der Signalprozessor (8) dazu ausgebildet ist, das Ansteuersignal (ST2) für das fünfte Schaltmittel (T2) und das Ansteuersignal (ST3) für das sechste Schaltmittel (T3) zu erzeugen, und ein erstes Grundansteuersignal (GN) und ein zweites Grundansteuersignal (GP) zu erzeugen,
- wobei die Logikeinheit (9) dazu ausgebildet ist, aus dem ersten Grundansteuersignal (GN) das Ansteuersignal (ST1) für das erste Schaltmittel (T1) und das Ansteuersignal (STN) für das dritte Schaltmittel (TN) zu erzeugen und aus dem zweiten Grundansteuersignal (GP) das Ansteuersignal (STP) für das zweite Schaltmittel (TP) und das Ansteuersignal (ST4) für das vierte Schaltmittel (T4) zu erzeugen.

2. Wechselrichter (1) nach Anspruch 1, **dadurch gekennzeichnet, dass**
- die Steuereinheit (7) dazu ausgebildet ist, vor einem Einschalten des vierten Schaltmittels (T4) die Schaltmittel (T1, T2, T3, T4, TP, TN) derart anzusteuern, dass während eines ersten vorgegebenen Zeitintervalls (ZI_1) ein Potential am Verbindungsknoten (N4) des dritten Schaltmittels (TN) und des vierten Schaltmittels (T4) dem Mittenpotential (N) entspricht.

3. Wechselrichter (1) nach Anspruch 1 oder 2, **dadurch gekennzeichnet, dass**
- die Steuereinheit (7) dazu ausgebildet ist, vor einem Einschalten des ersten Schaltmittels (T1) die Schaltmittel (T1, T2, T3, T4, TP, TN) derart anzusteuern, dass während eines vorgegebenen zweiten Zeitintervalls (ZI_2) ein Potential am Verbindungsknoten (N3) des zweiten Schaltmittels (TP) und des ersten Schaltmittels (T1) dem Mittenpotential (N) entspricht.

4. Wechselrichter (1) nacheinem der vorhergehenden Ansprüche, **dadurch gekennzeichnet, dass**
- die Logikeinheit (9) dazu ausgebildet ist,
- bei einer fallenden Flanke des ersten Grundansteuersignals (GN) zeitgleich eine fallende Flanke des Ansteuersignals (ST1) für das erste Schaltmittel (T1) zu erzeugen und zeitverzögert eine fallende Flanke des Ansteuersignals (STN) für das dritte Schaltmittel (TN) zu erzeugen,
- bei einer steigenden Flanke des ersten Grundansteuersignals (GN) zeitverzögert eine steigende Flanke des Ansteuersignals (ST1) für das erste Schaltmittel (T1) zu erzeugen und zeitgleich eine steigende Flanke des Ansteuersignals (STN) für das dritte Schaltmittel (TN) zu erzeugen,
- bei einer fallenden Flanke des zweiten Grundansteuersignals (GP) zeitgleich eine fallende Flanke des Ansteuersignals (ST4) für das vierte Schaltmittel (T4) zu erzeugen und zeitverzögert eine fallende Flanke des Ansteuersignals (STP) für das zweite Schaltmittel (TP) zu erzeugen, und
- bei einer steigenden Flanke des zweiten Grundansteuersignals (GP) zeitverzögert eine steigende Flanke des Ansteuersignals (ST4) für das vierte Schaltmittel (T4) zu erzeugen und zeitgleich eine steigende Flanke des Ansteuersignals (STP) für das zweite Schaltmittel (TP) zu erzeugen.

5. Wechselrichter (1) nach einem der vorhergehenden Ansprüche, **dadurch gekennzeichnet, dass**
- den Schaltmitteln (T1, T2, T3, T4, TP, TN) jeweilige Freilaufdioden (10, 11, 12, 13) parallel geschaltet sind.

6. Wechselrichter (1) nach einem der vorhergehenden Ansprüche, **dadurch gekennzeichnet, dass**
- das erste Schaltmittel (T1), das zweite Schaltmittel (TP), das dritte Schaltmittel (TN) und das vierte Schaltmittel (T4) jeweils IGBTs sind, und
- das fünfte Schaltmittel (T2) und das sechste Schaltmittel (T3) jeweils SiC-Schaltmittel sind.

## Claims

1. Inverter (1), comprising:
- a first input terminal (2), to which a positive DC link potential (VDC+) is applied during operation of the inverter (1),
- a second input terminal (3), to which a neutral potential (N) is applied during operation of the inverter (1),
- a third input terminal (4), to which a negative DC link potential (VDC-) is applied during operation of the inverter (1),
- an output terminal (5), to which an output potential (UA) is output during operation of the inverter (1),
- a choke (6),
- a first switching means (T1), a second switching means (TP), a third switching means (TN) and a fourth switching means (T4), wherein the first switching means (T1), the second switching means (TP), the third switching means (TN) and the fourth switching means (T4) are inserted in series between the first input terminal (2) and the third input terminal (4), and wherein a connection node (N1) of the second switching means (TP) and of the third switching means (TN) is electrically connected to the second input terminal (3),
- a fifth switching means (T2) and a sixth switching means (T3), wherein the fifth switching means (T2) and the sixth switching means (T3) are inserted in series between a connection node (N3) of the first switching means (T1) and the second switching means (TP) and a connection node (N4) of the third switching means (TN) and the fourth switching means (T4), wherein the choke (5) is inserted between a connection node (N5) of the fifth switching means (T2) and the sixth switching means (T3) and the output terminal (5), and
- a control unit (7) which is designed to activate the switching means (T1, T2, T3, T4, TP, TN),
- wherein the control unit (7) is designed to activate the switching means (T1, T2, T3, T4, TP, TN) before the fourth switching means (T4) is switched on, in such a manner that the fifth switching means (T2) is supplied with a voltage in the switched-off state, the magnitude of which does not exceed half of the potential difference between the positive DC link potential (VDC+) and the negative DC link potential (VDC-), and/or
- wherein the control unit (7) is designed to activate the switching means (T1, T2, T3, T4, TP, TN) before the first switching means (T1) is switched on, in such a way that the sixth switching means (T3) is supplied with a voltage in the switched-off state, the magnitude of which does not exceed half of the potential difference between the positive DC link potential (VDC+) and the negative DC link potential (VDC-)
**characterized in that**
- the control unit (7) is designed to generate a control signal (ST1) for the first switching means (T1), a control signal (STP) for the second switching means (TP), a control signal (STN) for the third switching means (TN), a control signal (ST4) for the fourth switching means (T4), a control signal (ST2) for the fifth switching means (T2) and a control signal (ST3) for the sixth switching means (T3),
- wherein the control unit (7) comprises a signal processor (8) and a logic unit (9),
- wherein the signal processor (8) is designed to generate the control signal (ST2) for the fifth switching means (T2) and the control signal (ST3) for the sixth switching means (T3), and to generate a first basic control signal (GN) and a second basic control signal (GP),
- wherein the logic unit (9) is designed to generate the control signal (ST1) for the first switching means (T1) and the control signal (STN) for the third switching means (TN) from the first basic control signal (GN) and to generate the control signal (STP) for the second switching means (TP) and the control signal (ST4) for the fourth switching means (T4) from the second basic control signal (GP).

2. Inverter (1) according to Claim 1, **characterized in that**
- the control unit (7) is designed to activate the switching means (T1, T2, T3, T4, TP, TN) before the fourth switching means (T4) is switched on, in such a manner that during a first predefined time interval (ZI_1) a potential at the connection node (N4) of the third switching means (TN) and the fourth switching means (T4) corresponds to the neutral potential (N).

3. Inverter (1) according to Claim 1 or 2, **characterized in that**
- the control unit (7) is designed to activate the switching means (T1, T2, T3, T4, TP, TN) before the first switching means (T1) is switched on, in such a manner that during a predefined second time interval (ZI_2) a potential at the connection node (N3) of the second switching means (TP) and the first switching means (T1) corresponds to the neutral potential (N).

4. Inverter (1) according to any one of the preceding claims, **characterized in that**
- the logic unit (9) is designed
- to generate in synchronous fashion a falling edge of the control signal (ST1) for the first switching means (T1) and to generate in time-delayed fashion a falling edge of the control signal (STN) for the third switching means (TN) upon a falling edge of the first basic control signal (GN),
- to generate in time-delayed fashion a rising edge of the control signal (ST1) for the first switching means (T1) and to generate in synchronous fashion a rising edge of the control signal (STN) for the third switching means (TN) upon a rising edge of the first basic control signal (GN),
- to generate in synchronous fashion a falling edge of the control signal (ST4) for the fourth switching means (T4) and to generate in time-delayed fashion a falling edge of the control signal (STP) for the second switching means (TP) upon a falling edge of the second basic control signal (GP), and
- to generate in time-delayed fashion a rising edge of the control signal (ST4) for the fourth switching means (T4) and to generate in synchronous fashion a rising edge of the control signal (STP) for the second switching means (TP) upon a rising edge of the second basic control signal (GP).

5. Inverter (1) according to any one of the preceding claims, **characterized in that**
- respective free-wheeling diodes (10, 11, 12, 13) are connected in parallel with the switching means (T1, T2, T3, T4, TP, TN).

6. Inverter (1) according to any one of the preceding claims, **characterized in that**
- the first switching means (T1), the second switching means (TP), the third switching means (TN) and the fourth switching means (T4) are each IGBTs, and
- the fifth switching means (T2) and the sixth switching means (T3) are each SiC switching means.

## Revendications

1. Onduleur (1), comportant :
- un premier pôle (2) de connexion d'entrée, auquel un potentiel (VDC+) positif de circuit intermédiaire est appliqué lorsque l'onduleur (1) est en fonctionnement,
- un deuxième pôle (3) de connexion d'entrée, auquel un potentiel (N) médian est appliqué lorsque l'onduleur (1) est en fonctionnement,
- un troisième pôle (4) de connexion d'entrée, auquel un potentiel (VDC-) négatif de circuit intermédiaire est appliqué lorsque l'onduleur (1) est en fonctionnement,
- un pôle (5) de connexion de sortie, qui donne un potentiel (UA) de sortie lorsque l'onduleur (1) est en fonctionnement,
- une bobine (6) de self,
- un premier moyen (T1) de coupure, un deuxième moyen (TP) de coupure, un troisième moyen (TN) de coupure et un quatrième moyen (T4) de coupure, dans lequel le premier moyen (T1) de coupure, le deuxième moyen (TP) de coupure, le troisième moyen (TN) de coupure et le quatrième moyen (T4) de coupure sont bouclés en série entre le premier pôle (2) de connexion d'entrée et le troisième pôle (4) de connexion d'entrée, et dans lequel un nœud (N1) de liaison du deuxième moyen (TP) de coupure et du troisième moyen (TN) de coupure est relié électriquement au deuxième pôle (3) de connexion d'entrée,
- un cinquième moyen (T2) de coupure et un sixième moyen (T3) de coupure, dans lequel le cinquième moyen (T2) de coupure et le sixième moyen (T3) de coupure sont montés en série entre un nœud (N3) de liaison du premier moyen (T1) de coupure et du deuxième moyen (TP) de coupure et un nœud (N4) de liaison du troisième moyen (TN) de coupure et du quatrième moyen (T4) de coupure, dans lequel la bobine (5) de self est montée entre un nœud (N5) de liaison du cinquième moyen (T2) de coupure et du sixième moyen (T3) de coupure et le pôle (5) de connexion de sortie,
- une unité (7) de commande, qui est constituée pour commander les moyens (T1, T2, T3, T4, TP, TN) de coupure,
- dans lequel l'unité (7) de commande est constituée pour commander, avant une fermeture du quatrième moyen (T4) de coupure, les moyens (T1, T2, T3, T4, TP, TN) de coupure, de manière à ce que le cinquième moyen (T2) de coupure soit, dans l'état ouvert, alimenté en une tension, dont la valeur ne dépasse pas la moitié de la différence de potentiel entre le potentiel (VDC+) positif de circuit intermédiaire et le potentiel (VDC-) négatif de circuit intermédiaire, et/ou
- dans lequel l'unité (7) de commande est constituée pour commander, avant une fermeture du premier moyen (T1) de coupure, les moyens (T1, T2, T3, T4, TP, TN) de coupure, de manière à ce que le sixième moyen (T3) de coupure soit, dans l'état ouvert, alimenté en une tension, dont la valeur ne dépasse pas la moitié de la différence de potentiel entre le potentiel (VDC+) positif de circuit intermédiaire et le potentiel (VDC-) négatif de circuit intermédiaire,
**caractérisé en ce que**
- l'unité (7) de commande est constituée pour produire un signal (ST1) de commande du premier moyen (T1) de coupure, un signal (STP) de commande du deuxième moyen (TP) de coupure, un signal (STN) de commande du troisième moyen (TN) de coupure, un signal (ST4) de commande du quatrième moyen (T4) de coupure, un signal (ST2) de commande du cinquième moyen (T2) de coupure et un signal (ST3) de commande du sixième moyen (T3) de coupure,
- dans lequel l'unité (7) de commande comporte un processeur (8) de signal et une unité (9) logique,
- dans lequel le processeur (8) de signal est constitué, pour produire le signal (ST2) de commande du cinquième moyen (T2) de coupure et le signal (ST3) de commande du sixième moyen (T3) de coupure et pour produire un premier signal (GN) de commande de base et un deuxième signal (GP) de commande de base,
- dans lequel l'unité (9) logique est constituée pour produire, à partir du premier signal (GN) de commande de base, le signal (ST1) de commande du premier moyen (T1) de coupure et le signal (STN) de commande du troisième moyen (TN) de coupure et pour produire, à partir du deuxième signal (GP) de commande de base, le signal (STP) de commande du deuxième moyen (TP) de coupure et le signal (ST4) de commande du quatrième moyen (T4) de coupure.

2. Onduleur (1) suivant la revendication 1, **caractérisé en ce que**
- l'unité (7) de commande est constituée pour commander, avant une fermeture du quatrième moyen (T4) de coupure, les moyens (T1, T2, T3, T4, TP, TN) de coupure de manière à ce que, pendant un premier intervalle (ZI_1) de temps donné à l'avance, un potentiel au nœud (N4) de liaison du troisième moyen (TN) de coupure et du quatrième moyen (T4) de coupure corresponde au potentiel (N) médian.

3. Onduleur (1) suivant la revendication 1 ou 2, **caractérisé en ce que**
- l'unité (7) de commande est constituée pour commander, avant une fermeture du premier moyen (T1) de coupure, les moyens (T1, T2, T3, T4, TP, TN) de coupure, de manière à ce que, pendant un deuxième intervalle (ZI_2) de temps donné à l'avance, un potentiel au nœud (N3) de liaison du deuxième moyen (TP) de coupure et du premier moyen (T1) de coupure corresponde au potentiel (N) médian.

4. Onduleur (1) suivant l'une des revendications précédentes, **caractérisé en ce que**
- l'unité (9) logique est constituée,
- pour produire, lors d'un front descendant du premier signal (GN) de commande de base, en même temps un front descendant du signal (ST1) de commande du premier moyen (T1) de coupure et pour produire, de manière retardée dans le temps, un front descendant du signal (STN) de commande du troisième moyen (TN) de coupure,
- pour produire, lors d'un front montant du premier signal (GN) de commande de base, de manière retardée dans le temps, un front montant du signal (ST1) de commande du premier moyen (T1) de coupure et pour produire en même temps un front montant du signal (STN) de commande du troisième moyen (TN) de coupure,
- pour produire, lors d'un front montant du deuxième signal (GP) de commande de base, en même temps un front descendant du signal (ST4) de commande du quatrième moyen (T4) de coupure et pour produire, de manière retardée dans le temps, un front descendant du signal (STP) de commande du deuxième moyen (TP) de coupure, et
- pour produire, lors d'un front montant du deuxième signal (GP) de commande de base, de manière retardée dans le temps, un front montant du signal (ST4) de commande du quatrième moyen (T4) de coupure et pour produire en même temps un front montant du signal (STP) de commande du deuxième moyen (TP) de coupure.

5. Onduleur (1) suivant l'une des revendications précédentes, **caractérisé en ce que**
- des diodes (10, 11, 12, 13) de roue libre respectives sont montées en parallèle avec les moyens (T1, T2, T3, T4, TP, TN) de coupure.

6. Onduleur (1) suivant l'une des revendications précédentes, **caractérisé en ce que**
- le premier moyen (T1) de coupure, le deuxième moyen (TP) de coupure, le troisième moyen (TN) de coupure et le quatrième moyen (T4) de coupure sont chacun des IGBTs, et
- le cinquième moyen (T2) de coupure et le sixième moyen (T3) de coupure sont chacun des moyens de coupure au SiC.
